# EUROPEAN PATENT SPECIFICATION

(11) **EP 2 871 708 B1**
(45) Date of publication and mention of the grant of the patent: **16.06.2021**
(21) Application number: 13191853.4
(22) Date of filing: 07.11.2013
(51) Int. Cl.: H01Q 1/06, H01Q 13/20, H01B 11/18, F21V 21/008, F21V 33/00, H01B 1/02

(54) **Communication cable with illumination**
Kommunikationskabel mit Beleuchtung
Câble de communication avec éclairage

(43) Date of publication of application: 13.05.2015
(73) Proprietor: Swisscom AG, 3050 Bern (CH)
(72) Inventor: Wenger, Daniel, 3628 Uttigen (CH)
(74) Representative: BOVARD AG

(56) References cited:
- EP-A1- 0 643 438
- EP-A2- 0 188 085
- WO-A1-2004/073199
- JP-A- S6 248 139
- JP-A- 2006 270 765
- JP-A- 2013 031 069
- US-A1- 2004 160 774
- US-A1- 2006 056 855
- US-A1- 2008 198 618
- US-A1- 2013 026 820
- US-A1- 2013 037 323
- US-A1- 2013 098 674

## Description

The present invention relates to a communication cable with a leaky feeder structure for distribution of radio data signals, in particular of radio data signals for mobile communication, and a system for distribution of data signals and for illumination.

The technique of leaky feeders is widely used in communication technology. Typically, leaky feeders are coaxial cables comprising an inner conductor surrounded by an insulation layer, an outer conductor arranged over the insulation shield and a jacket enclosing the outer conductor. The outer conductor comprises a plurality of slots, gaps or other apertures along its length such that the coaxial cable emits and receives radio waves, especially VHF and UHF waves or waves of mobile telecommunication systems like WLAN, LTE or UMTS along its length. Thus, leaky feeders are used as radiating cables or antennas in a variety of applications, for example for underground communication, in aircraft systems, in-building communication, in mobile communication and many others.

In WO 2004/073199 leaky feeders are used as distributed aperture antennas for a multi-user wireless communication system. The apertures of the leaky feeders allow radiated energy to leak from the antenna and form low-power, localized electric fields that can couple receivers to the antenna. The multiple electric fields ensure that the electric field strength is distributed throughout the communication system. The leaky feeders can be installed together with other wiring bundles in existing harness channels or just within the ceiling or the floor of a room or vehicle. Attention has to be paid that the signal of the leaky feeder is not shielded by structures, which would influence the communication system. Thus the leaky feeders often are installed in exposed, visible areas, which interfere with styling and optical design of the room or vehicle.

EP 1855398 describes a communication system using a leaky optical fiber for optical communication. The system works as a light communication device. Instead of radio signals, data is transmitted by light of a light emitting unit, e. g. laser diodes or light emitting diodes. The light is modulated by a signal controller in accordance with data to be transmitted. The light signal data then is transferred by a leaky optical fiber. Light receiving units receive and demodulate the light and transmit the resulting data to a network. The light of the light emitting unit is only used for modulating the data to be transferred. But the system can be used in combination with other cabling systems.

JP2013031069 describes a communication system using a cable and LEDs, in which the illumination means are however not arranged along sections of a length of the cable, but instead located in the vicinity of the cable.

The known communication systems are focused on data transmission or reception only. Other functions are not fulfilled by the equipment of such systems. Therefore systems for other functions have to be designed and installed separately. EP1088085 discloses an example of such a system, consisting of a leaky optical fiber deprived of any illumination means.

It is an object of the present invention to provide a communication cable that serves multiple purposes, reduces the overall installation effort and costs, saves installation space and comprises a simple structure.

These and other objects are fulfilled by a communication cable and a system according to independent claims 1 and 8. Advantageous features and preferred embodiments of the communication cable according to the invention are disclosed in dependent claims.

The communication cable for distribution of radio data signals, in particular for homogeneous distribution of radio data signals, according to the present invention inter alia comprises a core conductor, an insulation shield, an outer conductor with a plurality of apertures basically along its full length and a jacket. The communication cable preferably is designed as a leaky feeder structure, wherein the apertures of the outer conductor serve for the distribution of the data signals. An illumination arrangement is arranged at least along sections of aircrafts, etc., for the surveillance of the communication cable and for other applications. The communication cable according to the invention saves installation space, because only one installation for both functions is required and reduces weight of the wiring necessary to fulfill all these functions.

Also the outer conductor of the communication cable can comprise additional layers according to specific requirements of the cable. For example there can be layers for isolation, for visual protection of the outer conductor, and/or for material separation. These layers are designed such that radio waves at least partly can transmit the layers to provide a radiating cable.

The communication cable is advantageously used for distributing radio data signals, e. g. for communication by GSM, 3GPP, PCS, LTE, UMTS, WLAN, CDMA95, CDMA2000 or other wireless communication systems. Thus the communication cable preferably comprises metal conductors as the core conductor and the outer conductor as used in coaxial cables for radio data transmission and reception, in particular copper conductors. But the illumination arrangement may also be incorporated in other coaxial cables comprising a leaky feeder structure.

The illumination arrangement arranged at least along sections of the length of the communication cable can comprise various different layouts. In general the illumination arrangement comprises a plurality of light units emitting light, like light emitting diodes (LEDs), one or more illuminated fibertubes or fiberstrips, one or more plastic/polymeric optical fibers (POF), fluorescence units, lasers and/or bulbs, or a combination thereof. The light units themselves may be set up by several light emitting elements. The light units may comprise different colors. Also they may have different sizes as long as they cooperate with the size of the leaky feeder structure.

In one embodiment the fluorescence unit could be realized by a dielectric area in a way that this area is not filled by a hard material but by distance-holders defining a free space in between each other, which can be filled with gas for fluorescence purposes. A transparent jacket element would be provided just inside the outer conductor or outside the outer conductor which prevents the gas from diffusion. Furthermore the distance holders could be used as cathode anode of the cable.

In a further embodiment the illumination arrangement of the communication cable is arranged radially inside the jacket and the jacket is transparent or comprises openings at least in regions of the illumination arrangement. The illumination arrangement may be arranged between the jacket and the outer conductor along the length of the communication cable. The light units of the illumination arrangement may also be located within the apertures of the outer conductor without fully covering the apertures or the light units may be located in separate holes in the outer conductor. Also the light units of the illumination arrangement can be arranged on or in an outer surface of the insulation shield, preferably next to or between apertures in the outer conductor. In summary the illumination arrangement comprises a plurality of light units arranged between the jacket and the insulation shield along the outer conductor and the jacket is transparent or comprises openings at least in regions of the light units. The outer conductor is part of the power supply of the light units arranged between the jacket and the insulation shield along the outer conductor and no separate power supply for the illumination arrangement is necessary. Thus the outer conductor contributes to power the light units of the illumination arrangement.

In a preferred example of the communication cable, the apertures and the illumination arrangement are arranged such that radiation and illumination are emitted in the same spatial direction. This is advantageous in case the communication cable is mounted on the ground, the wall and/or the ceiling, so that radiation can be directed to an open space of the surroundings instead towards the ground, wall or ceiling for example.

In one example of a communication cable according to the invention powering of the illumination arrangement generally requires two or more conductors. The combination of the leaky feeder structure and the illumination arrangement is realized such that either the outer conductor or both of the core conductor and outer conductor of the leaky feeder structure can be used to supply the illumination arrangement. In case the illumination arrangement is powered by the conductors of the leaky feeder structure there is less installation effort and less space is required within the communication cable.

It is clear to a person skilled in the art, that the described embodiments may be combined. For example there may be light units on the inside of the jacket and on the inside of the insulation shield. For all these embodiments the jacket and/or the insulation shield may have slight indentations on their inner or outer surfaces to accommodate the light units. Also a second shielding or sleeve between the outer conductor and the jacket can be used for accommodation of the illumination arrangement, which is interrupted in areas of the apertures of the outer conductor to allow for proper distribution of the data signals. The sleeve also may be designed as a light guide and serve as illumination arrangement. Also the insulation shield may be fabricated of light guiding material. Light emitted by a light unit can illuminate the insulation shield and exit the communication cable via the apertures of the outer conductor and transparent areas in the jacket.

The apertures, holes and/or openings in the outer conductor, the jacket and the insulation shield may be designed to generate a specific illumination pattern. The illumination pattern may include periodically changing colors or changing colors from one end to another end of a section of the communication cable or along the full length of the cable. Or the light units may be arranged in figurative pattern, e. g. in a spiral pattern or arrow pattern around the communication cable or the like.

Apart from the advantages mentioned above the illumination arrangement can be used to find or survey the apertures in the outer conductor and help to survey and inspect the leaky feeder structure.

A system for distribution of data signals and simultaneously for illumination according to the invention uses a communication cable as described above. With this system the communication cable can be installed easily, and with less interference with the style of the environment. Also the system can provide a helpful use for orientation and attention.

Several embodiments of the invention and an example not forming part of the invention will be illustrated in the following drawings, which merely serve for explanation and should not be construed as being restrictive to the scope of the invention. The features of the invention becoming obvious from the drawings should be considered to be part of the disclosure of the invention both on their own and in any combination. The drawings show:
- Fig. 1:: a first exemplary embodiment of a communication cable according to the present invention,
- Fig. 2:: a second exemplary embodiment of a communication cable according to the present invention,
- Fig. 3:: a third exemplary embodiment of a communication cable according to the present invention, and
- Fig. 4:: an example of a communication cable not in accordance with the present invention.

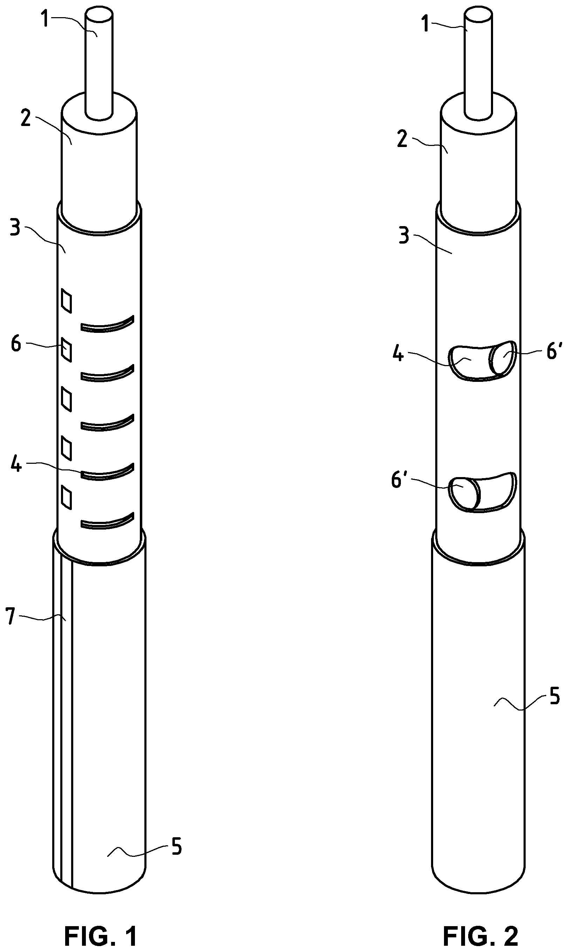

The communication cables according to figures 1 to 4 show a cable with a leaky feeder structure. The leaky feeder structure generally comprises the following parts: a core conductor 1, an insulation shield 2, an outer conductor 3, a plurality of apertures 4, and a jacket 5. Furthermore the communication cables according to figures 1 to 4 comprise LEDs 6 or a plastic optical fiber 8 for an illumination arrangement along the length of the communication cable. The core conductor 1 is suitable to carry a radio signal that is intended for wireless emission via the communication cables illustrated in figures 1 to 4. The insulation shield 2 comprises a dielectric material and is, inter alia, used to provide a desirable geometric arrangement of the elements and components of the communication cables while being enabled to be polarized by an electric field so that radio waves such as those carried by the core conductor 1 may be radiated through it. The outer conductor 3 is enabled to act as further shielding and help to isolate the core conductor 1.The LEDs 6 or the plastic optical fiber 8 may comprise suitable logic, circuitry and/or code that may be operable to generate radiation in the visible spectrum.

As described above, the communication cable with the leaky feeder structure comprises a core conductor 1, an insulation shield 2 surrounding the core conductor 1, an outer conductor 3 around the insulation shield 2 with a plurality of apertures 4 along its length and a jacket 5 covering the outer conductor 4. The core conductor 1 and the outer conductor 3 are made of copper, for example. Alternatively copper alloys, silver or even aluminum may be used. The insulation shield is made of dielectric material, which can comprise an indentation formation on its inner or outer surface to accommodate the illumination arrangement. As shown the insulation shield comprises a cylindrical shape but also may have a triangular, a square or other non-cylindrical shape, which ensured the function of the leaky feeder structure and additionally may represent a design element of the illuminating function of the communication cable, for example to create differing light patterns.

In the exemplary embodiment of figure 1 the communication cable comprises exemplary illumination arrangement with light units in the form of LEDs 6 positioned on the outer surface of the outer conductor 3. The LEDs 6 are, for example, arranged longitudinally along the length of the cable. In figure 1, the LEDs 6 are spaced equidistantly, but it will be clear to the person skilled in the art that any spacing between the LEDs 6 may be used. The LEDs 6 are arranged such that their interference with the functioning of the apertures 4 may be reduced significantly. For example, the line of LEDs is located on a section of the circumference of the outer conductor 3 that does not comprise any apertures in longitudinal direction, while a line of apertures 4 runs longitudinally along the cable in another section of the circumference of the outer conductor 3.

In accordance with various embodiments of the invention, the jacket 5 may comprise small indentations (not visible), which accommodate the LEDs 6. The jacket 5 may comprise a transparent material in the area of the indentations, for example a longitudinal transparent stripe 7 along the length of the line of light units, as illustrated in figure 1. The transparent material area also may include the indentations to accommodate the LEDs 6. The outer conductor 3 powers the LEDs 6.

In the exemplary embodiment of figure 2 the communication cable comprises an illumination arrangement with light units in form of round (or any arbitrary shape) LEDs 6' positioned in a corner of the apertures 4 of the outer conductor 3. The remaining opening of the apertures 4 is designed and sized to ensure appropriate functioning of the leaky feeder structure of the communication cable. The jacket 5 may be transparent. The LEDs 6' are powered by the outer conductor 3. The LEDs 6' can emit light of different colors, in accordance with some embodiments of the invention. Also the LEDs 6' may be alternately positioned in another corner of the apertures 4, or also elsewhere in the apertures 4. In this way, the placement of the LEDs 6' maybe arranged to form desirable light patterns for the communication cable of the embodiment shown in figure 2.

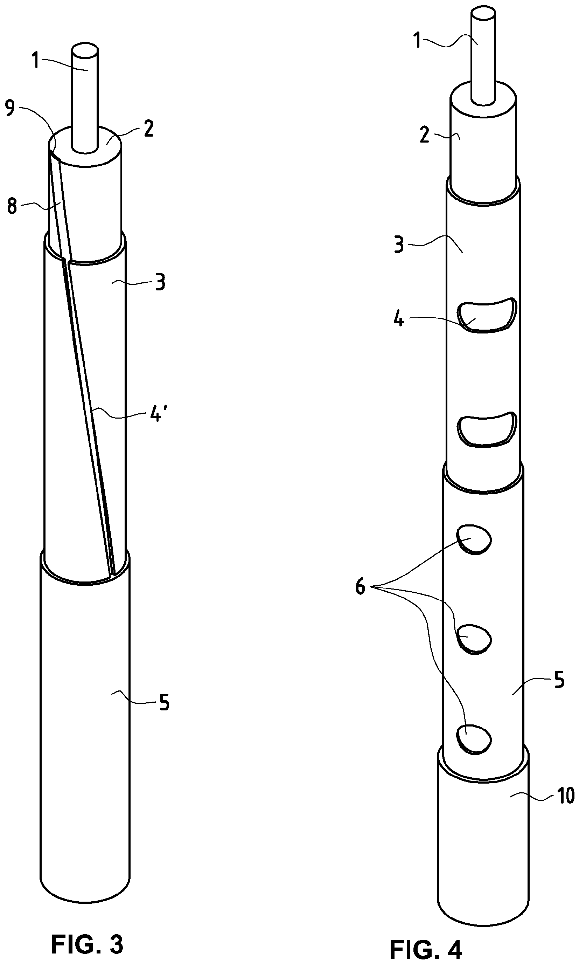

In the exemplary embodiment of figure 3, the communication cable comprises an illumination arrangement with a light unit in form of a plastic optical fiber (POF) 8, that is designed as an inlay in a recess 9 in the insulation shield 2 running along the length of the communication cable. The outer conductor 3 comprises an aperture in the form of a slit 4' along the length of the outer conductor 3. The slit 4' is arranged opposing to the recess 9 and covers the plastic optical fiber 8. The slit 4' may be a spiral slit as illustrated, or a straight slit, or any other desirable shape. The jacket 5 may be transparent along its length, for example. The plastic optical fiber 8 is flexible so that the communication cable remains flexible and can easily be installed around corners or the like. Of course other patterns than a spiral shape are possible for the plastic optical fiber.

In an example according to figure 4 the communication cable comprises a leaky feeder structure with inner core conductor 1, dielectric insulation shield 2, an outer conductor 3 with apertures 4 and a jacket 5. In this example the illumination arrangement represented for example by LEDs 6 and preferably also the powering of the illumination arrangement can be added on top of the jacket 5 and protected by a second jacket 10, which can be completely or partially transparent. In this case the jacket 5, i. e. the first jacket, for example is black to provide some reflection of the light emitted by the LEDs 6. This concept allows independent production of communication and illumination part, because the light units of the illumination arrangement are located on the outer surface of the first jacket 5 of the communication cable. The additional second jacket 10 is used to protect and fix the illumination arrangement to the outer surface of the first jacket 5.

Generally, the communication cable according to the invention may be used in order to detect cable damage. For example, damage is detected at a location along the cable where the illumination does not work anymore. This gives an indication, that the illumination arrangement and/or the supply conductors are damaged and thereby provides a visible clue to find the damage location on the cable.

The radio emission function of the communication cable according to figures 1 to 4 follows the technical concept of leaky feeders, which are well known in the art and therefore not explained in detail herein. The shown communication cable may be part of a system for the distribution of data signals and for illumination used in exposed or visible installations of the cable, in particular within closed environments. It will be clear to the person skilled in the art that different layouts of an illumination arrangement comprising different light units, different patterns of light units or different positions of light units, for example as illustrated in figures 1 through 4, may be combined within one single communication cable. Thus offering a system for communication and illumination of a large variety of light patterns along the cable. Furthermore a system for the distribution of data signals and for illumination may include a plurality of separately installed communication cables and/or the plurality of communication cables may comprise communication cables of varying design. In particular several communication cables with a differing design may be combined.

### Reference Numbers

- 1: core conductor
- 2: insulation shield
- 3: outer conductor
- 4, 4': apertures
- 5: jacket
- 6, 6': LED
- 7: transparent area
- 8: plastic optical fiber
- 9: recess
- 10: second jacket

## Claims

1. Communication cable for the distribution of radio data signals, comprising a leaky feeder structure with a core conductor (1) surrounded by an insulation shield (2), an outer conductor (3) arranged over the insulation shield (2) with a plurality of apertures (4; 4') and a jacket (5) enclosing the outer conductor (3), **characterized in that** an illumination arrangement (6; 8) is arranged at least along sections of a length of the cable and incorporated in the cable,
wherein the illumination arrangement comprises a plurality of light units arranged between the jacket (5) and the insulation shield (2) along the outer conductor (3), wherein, at least in regions of the illumination arrangement, the jacket (5) is transparent or comprises openings, and
wherein the outer conductor (3) powers the light units arranged between the jacket (5) and the insulation shield (2) along the outer conductor (3).

2. Communication cable according to claim 1, wherein the illumination arrangement comprises a plurality of light emitting diodes (6; 6'), one or more illuminated fibertubes or fiberstrips, one or more plastic optical fibers (8), fluorescence units, lasers and/or bulbs or a combination thereof.

3. Communication cable according to one of the preceding claims, wherein the illumination arrangement is arranged radially inside the jacket (5).

4. Communication cable according to one of the preceding claims, wherein the insulation shield is made of light guiding material.

5. Communication cable according to one of the preceding claims, wherein the apertures (4, 4') of the outer conductor (3) are designed according to a specific illumination pattern provided by the illumination arrangement.

6. Communication cable according to one of the preceding claims, wherein the communication cable is designed for the distribution of radio data signals.

7. Communication cable according to one of the preceding claims, wherein the core conductor and the outer conductor are metal conductors.

8. System for distribution of data signals and for illumination comprising at least one communication cable according to one of the preceding claims.

## Patentansprüche

1. Kommunikationskabel für die Verteilung von Funk-Satensignalen, umfassend eine Leckleitung-Struktur mit einem Kernleiter (1), umhüllt von einer Abschirmung (2), einem Aussenleiter (3), angeordnet über der Abschirmung (2) mit einer Vielzahl von Öffnungen (4; 4') und einer Schutzhülle (5), welche den Aussenleiter (3) umschliesst, **dadurch gekennzeichnet, dass** eine Beleuchtungsanordnung (6 ; 8) zumindest entlang von Abschnitten einer Länge des Kabels angeordnet und in dem Kabel integriert ist,
wobei die Beleuchtungsanordnung entlang dem Aussenleiter (3) zwischen der Schutzhülle (5) und der Abschirmung (2) eine Vielzahl von Lichteinheiten umfasst, wobei zumindest in Bereichen der Beleuchtungsanordnung die Schutzhülle (5) transparent ist oder Öffnungen aufweist, und
wobei der Aussenleiter (3) die Lichteinheiten mit Energie versorgt, welche zwischen der Schutzhülle (5) und der Abschirmung (2) entlang des Aussenleiters (3) angeordnet sind.

2. Kommunikationskabel nach Anspruch 1, wobei die Beleuchtungsanordnung eine Vielzahl von Lichtemittierenden Dioden (6; 6'), eine oder mehrere illuminierte Faserrohre oder Faserstreifen, eine oder mehrere Kunststoffoptikfasern, Fluoresenzeinheiten, Laser und/oder Glühbirnen oder eine Kombination davon umfasst.

3. Kommunikationskabel nach einem der vorhergehenden Ansprüche, wobei die Beleuchtungsanordnung radial innerhalb der Schutzhülle (5) angeordnet ist.

4. Kommunikationskabel nach einem der vorhergehenden Ansprüche, wobei die Schutzhülle aus einem Lichtleitenden Material gemacht ist.

5. Kommunikationskabel nach einem der vorhergehenden Ansprüche, wobei die Öffnungen (4, 4') des Aussenleiters (3) gemäss einem spezifischen Beleuchtungsmuster ausgebildet sind, welches von der Beleuchtungsanordnung vorgesehen ist.

6. Kommunikationskabel nach einem der vorhergehenden Ansprüche, wobei das Kommunikationskabel für die Verteilung von Funkdatensignalen ausgebildet ist.

7. Kommunikationskabel nach einem der vorhergehenden Ansprüche, wobei der Kernleiter und der Aussenleiter Metallleiter sind.

8. System zur Verteilung von Datensignalen und zur Beleuchtung, umfassend zumindest ein Kommunikationskabel nach einem der vorhergehenden Ansprüche.

## Revendications

1. Câble de communication pour la distribution de signaux de données radio, comprenant une structure de transmission à câble rayonnant avec un conducteur principal (1) surmonté d'un écran isolant (2), un conducteur extérieur (3) agencé sur l'écran isolant (2) muni d'une pluralité d'ouvertures (4;4') et une gaine (5) recouvrant le conducteur extérieur (3), **caractérisé en ce qu'**un dispositif d'éclairage (6 ; 8) est agencé au moins le long de sections longitudinales du câble et est incorporé dans le câble,
le dispositif d'éclairage comprenant une pluralité d'unités lumineuses agencées entre la gaine (5) et l'écran isolant (2) le long du conducteur extérieur (3), et au moins dans des zones du dispositif d'éclairage, la gaine (5) est transparente ou comprend des ouvertures, et
le conducteur extérieur (3) alimentant en énergie les unités lumineuses agencées entre la gaine (5) et l'écran isolant (2) le long du conducteur extérieur (3).

2. Câble de communication selon la revendication 1, dans lequel le dispositif d'éclairage comprend une pluralité de diodes émettrices de lumière (6 ;6'), un ou plusieurs tubes de fibres ou une ou plusieurs bandes de fibres illuminées, une ou plusieurs fibres optiques en plastique (8), des unités de fluorescence, des lasers et/ou des ampoules ou une combinaison de ces éléments.

3. Câble de communication selon l'une des revendications précédentes, dans lequel le dispositif d'éclairage est agencé radialement à l'intérieur de la gaine (5).

4. Câble de communication selon l'une des revendications précédentes, dans lequel l'écran isolant est réalisé dans un matériau de guidage optique.

5. Câble de communication selon l'une des revendications précédentes, dans lequel les ouvertures (4, 4') du conducteur extérieur (3) sont disposée selon un motif d'illumination spécifique prévu par le dispositif d'éclairage.

6. Câble de communication selon l'une des revendications précédentes, dans lequel le câble de communication est conçu pour distribuer des signaux de données radio.

7. Câble de communication selon l'une des revendications précédentes, dans lequel le conducteur principal et le conducteur extérieur sont des conducteurs métalliques.

8. Système pour la distribution des signaux de données et pour l'éclairage comprenant au moins un câble de communication selon l'une des revendications précédentes.
